# FASCICULE DE BREVET EUROPEEN

(11) **EP 1 127 394 B1**
(45) Date de publication et mention de la délivrance du brevet: **14.08.2002**
(21) Numéro de dépôt: 99971586.5
(22) Date de dépôt: 06.10.1999
(51) Int. Cl.: H02G 3/30, H02G 3/04

(54) **DISPOSITIF DE FIXATION D'UN FIL SUR UN ELEMENT PORTEUR MUNI D'AU MOINS UNE OUVERTURE ET ENSEMBLE PORTEUR POUR CHEMIN DE CABLES COMPORTANT AU MOINS UN TEL DISPOSITIF**
LEITUNGSHALTERUNG AUF EINEM TRÄGERELEMENT MIT MINDESTENS EINER ÖFFNUNG UND TRAGENDER AUFBAU FÜR KABELFÜHRUNG.
DEVICE FOR FIXING A WIRE ON A CARRIER ELEMENT PROVIDED WITH AT LEAST AN OPENING AND CARRIER ASSEMBLY FOR CABLE TROUGHS COMPRISING AT LEAST SAID DEVICE

(30) Priorité: 03.11.1998 FR 9813790
(43) Date de publication de la demande: 29.08.2001
(73) Titulaire: METAL DEPLOYE SA, F-21500 Montbard (FR)
(72) Inventeur: DURIN, Michel, F-78330 Fontenay-le-Fleury (FR)
(74) Mandataire: Barbin le Bourhis, Joel
(86) Numéro de dépôt international: FR9902387
(87) Numéro de publication internationale: WO0027005

(56) Documents cités:
- FR-A- 2 540 946
- FR-A- 2 697 690

## Description

La présente invention a pour objet un dispositif de fixation permettant de fixer un fil sur un élément porteur muni d'au moins une ouverture.

Le problème se pose souvent d'avoir à fixer un fil sur un élément porteur ; c'est le cas, par exemple, lorsqu'il s'agit de fixer une structure en treillis constituée de fils soudés ; une structure en treillis peut être, par exemple, un chemin de câbles en forme générale de U constitué de fils longitudinaux soudés à des fils transversaux pliés en U ; un chemin de câbles est, comme on le sait, adapté à recevoir des câbles électriques, téléphoniques, informatiques, de fibres optiques, ou autres.

On a déjà proposé, pour fixer une telle structure en treillis, par exemple dans le document FR-A-2 697 690, de mettre en oeuvre un profilé de fixation présentant une surface plane adaptée à recevoir le fond du chemin de câbles et munie d'ergots aptes à venir coopérer avec les fils du fond du chemin de câbles.

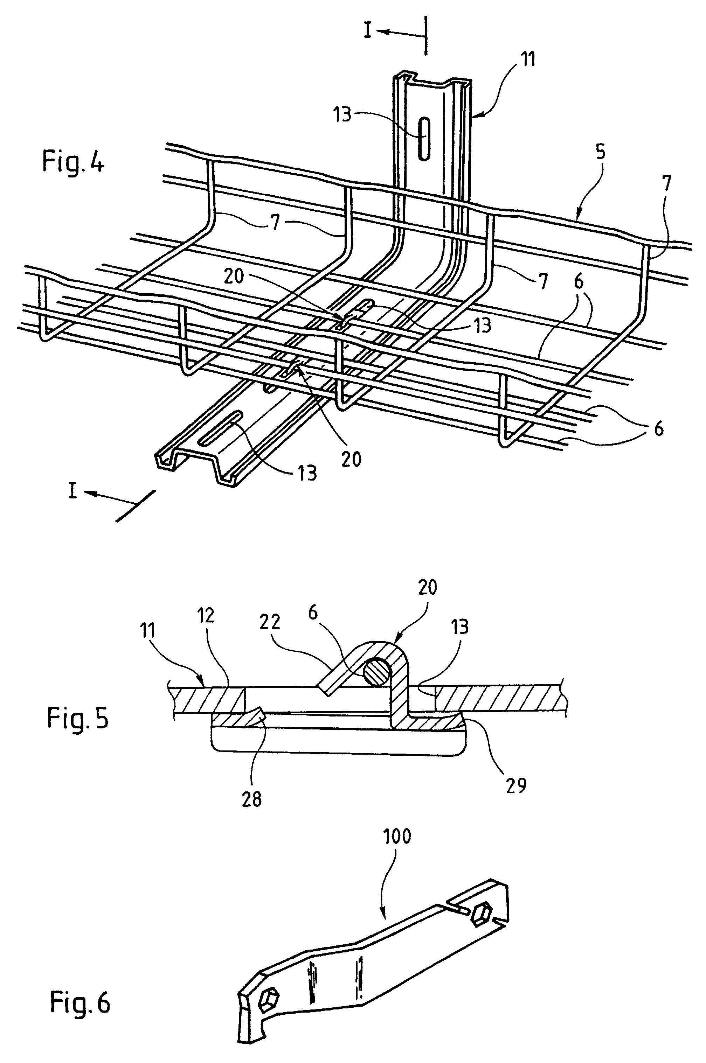

Selon ce document, un profilé de fixation en tôle présente une surface plane sur laquelle repose, par ses fils de fond longitudinaux soudés à des fils transversaux en U, un chemin de câbles, du genre de celui montré en perspective sur la figure 4.

La surface plane du profilé présente au moins deux ouvertures allongées d'où sont extraits, par découpage et pliage, les ergots.

Les ergots, avant que n'ait été effectuée l'opération de fixation proprement dite, sont conformés en une languette qui s'étend parallèlement à la surface plane du profilé, en étant à une distance, de cette surface plane, égale globalement au diamètre des fils de fond longitudinaux.

Pour fixer le chemin de câbles, on place celui-ci sur la surface plane du profilé, on le déplace en translation en sorte de placer les fils de fond sous les languettes des ergots jusqu'à ce qu'ils viennent en butée contre le raccordement de la languette à la surface plane du profilé ; bien entendu, les fils de fond se répétant à des intervalles prédéterminés, la position des ergots doit correspondre à ces intervalles.

Pour terminer l'opération de fixation, il suffit de rabattre les languettes des ergots autour des fils de fond longitudinaux, vers la surface plane du profilé, à l'aide d'un outil quelconque, ou mieux à l'aide d'un outil adéquat tel que l'outil 100 représenté sur la figure 6 et déjà commercialisé par la déposante.

Cette disposition donne satisfaction, s'agissant de fixer une structure du genre à treillis, mais présente plusieurs inconvénients.

En premier lieu, le profilé à ergots ne peut s'adapter qu'à un type de chemin de câbles en treillis de fils déterminé avec lequel il est destiné à coopérer, l'écartement entre ergots devant correspondre exactement à celui des fils longitudinaux du chemin de câbles.

En second lieu, il est nécessaire que les profilés de fixation soient parfaitement alignés les uns par rapport aux autres si l'on veut éviter un cheminement sinueux du chemin de câbles. Un tel alignement suppose un pareil alignement des structures de support des profilés de fixation telles que parois, poteaux, alignement qui ne peut toujours être parfaitement obtenu.

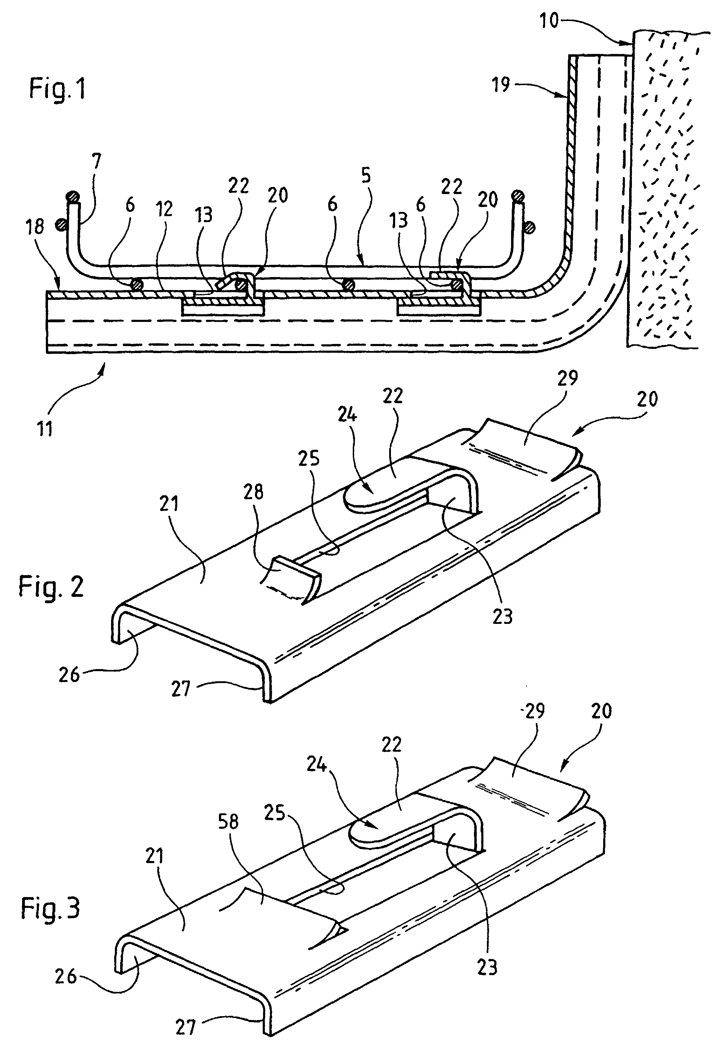

Pour fixer une structure qui n'est pas du genre à treillis mais du genre globalement pleine, un profilé à ergots ne convient pas ; par exemple, pour rester dans le domaine des chemins de câbles, on connaît des chemins de câbles en tôle perforée, à section en forme de U ; dans ce cas, on a prévu un profilé sans ergots, présentant sur une surface plane des ouvertures au droit desquelles sont placées des perforations du fond du chemin de câbles qui est alors fixé à l'aide de boulons. Un tel profilé à ouvertures est du genre, par exemple, du profilé 11 en L représenté sur la figure 1 ; il comporte une partie horizontale 18, portant une aile plane 12, et une partie verticale 19 par laquelle il est assujetti à un élément porteur tel que le mur 10 ; l'aile plane supérieure 12 présente des ouvertures 13, de préférence allongées pour être sûr que des perforations de la structure globalement pleine se situeront au droit de celles-ci.

Comme on le voit, deux types de profilés sont nécessaires pour fixer une structure du genre à treillis ou une structure du genre globalement pleine.

La présente invention a pour but de pallier cet inconvénient. Elle a pour objet un dispositif de fixation d'un fil sur un élément porteur muni d'au moins une ouverture, sans ergots, en sorte qu'un seul type d'élément porteur puisse convenir pour fixer au moins un fil, tel que les fils longitudinaux d'une structure en treillis, ou bien une structure globalement pleine.

On a également cherché à ce que le dispositif de fixation d'un fil puisse s'adapter à plusieurs types de structures en treillis dont les écartements des fils longitudinaux sont légèrement différents, de l'ordre de quelques millimètres au plus.

On a aussi cherché à ce que le dispositif de fixation puisse s'adapter à un alignement imparfait des éléments porteurs.

On a en outre cherché à ce que le dispositif de fixation puisse fonctionner quelle que soit la position de l'élément porteur.

Selon l'invention, un dispositif de fixation, utilisable pour la fixation d'un fil sur un élément porteur ayant une aile plane munie d'au moins une ouverture, est caractérisé par le fait qu'il est en tôle et comporte une semelle globalement plane d'où émerge une patte adaptée à traverser ladite ouverture et à s'engager sur le fil.

La semelle est de dimensions telles qu'elle ne peut passer à travers la ou les ouvertures de l'aile plane de l'élément porteur.

Avantageusement, la patte comprend une languette parallèle à la semelle à laquelle elle est raccordée par un talon, la languette étant à une distance de la semelle égale globalement à la valeur du diamètre du fil à fixer à laquelle il convient d'ajouter l'épaisseur de l'aile plane de l'élément porteur.

De préférence, la patte est formée par la matière issue d'une découpe ménagée dans la semelle ; avantageusement, la découpe est de forme générale rectangulaire.

De préférence, la languette s'étend juste au dessus de la découpe qu'elle surplombe.

De préférence, le bord de la découpe faisant face au talon de la patte et le bord, proche du talon, de la semelle sont conformés en griffes inclinées du même côté que la patte.

En variante, deux bords de la découpe se faisant face portent des griffes inclinées du même côté que la patte.

De préférence, la semelle est prolongée selon deux retours dirigés, par rapport à la semelle, du côté opposé à celui où se trouve la patte.

Selon une autre forme de réalisation, la semelle est prolongée selon deux retours dirigés, par rapport à la semelle, du même côté que celui où s'étend la patte ; de préférence, lesdits retours sont munis de griffes.

Selon une forme particulière d'application du dispositif de fixation selon l'invention, celui-ci est destiné à la fixation d'une structure en treillis conformée en chemin de câbles.

La présente invention concerne aussi un ensemble porteur pour chemin de câbles en treillis de fils, ensemble porteur constitué par l'association d'un élément porteur possédant au moins une ouverture allongée sur une aile plane et d'au moins un dispositif de fixation pour fil selon l'invention.

L'élément porteur est, par exemple, un profilé formant une équerre, une console, un pendard, une balancelle ou autre, pour fixer le chemin de câbles sur une paroi verticale, sur des poteaux, à partir d'un plafond, la fixation pouvant s'effectuer sur les fils de fond du chemin de câbles ou sur les fils de côté.

Préférentiellement, l'élément porteur de l'ensemble porteur comporte au moins deux ouvertures et le nombre de dispositifs de fixation de fils associés est au moins égal à deux, les ouvertures étant disposées sur l'aile de l'élément porteur de manière à coopérer avec des fils longitudinaux différents du chemin de câbles.

Pour mieux faire comprendre l'objet de l'invention, on va en décrire maintenant, à titre d'exemple, purement illustratif et non limitatif, des modes de réalisation représentés sur les dessins annexés.

Sur ces dessins :
- la figure 1 est une vue en coupe partielle, selon l-l de la figure 4, montrant l'utilisation d'un profilé à ouvertures de l'art antérieur pour fixer un chemin de câbles en treillis grâce à la mise en oeuvre d'un dispositif de fixation selon l'invention ;
- la figure 2 montre en perspective, à grande échelle, un dispositif de fixation selon l'invention ;
- la figure 3 est analogue à la figure 2 et montre une variante ;
- la figure 4 montre en perspective l'ensemble représenté sur la figure 1 ;
- la figure 5 est un détail montrant la mise en oeuvre du dispositif selon la figure 2 ;
- la figure 6 montre en perspective un outil pouvant être utilisé lors de la mise en oeuvre du dispositif de fixation des figures 1 à 4 ;
- la figure 7 est analogue à la figure 2 et représente une variante de dispositif de fixation selon l'invention ;
- la figure 8 est analogue à la figure 2 et représente une autre variante de dispositif de fixation selon l'invention.

La figure 1 montre un élément porteur qui est un profilé 11 à ouvertures 13, habituellement utilisé en général pour porter à fixation une structure globalement pleine, ici équipé de dispositifs de fixation 20 selon l'invention permettant à ce même profilé 11 de porter à fixation des fils 6, tels que les fils longitudinaux d'une structure en treillis, ici le chemin de câbles 5.

Un dispositif de fixation 20 selon l'invention est représenté à grande échelle en perspective sur la figure 2. Sur cette figure, on voit que le dispositif de fixation 20 comporte une semelle 21, de forme générale rectangulaire, de longueur et largeur supérieures à la longueur et à la largeur des ouvertures 13 du profilé 11, d'où émerge une patte 24 ; le dispositif de fixation 20 est en tôle et ici la patte 24 est formée par la matière issue d'une découpe 25 ménagée dans la semelle 21, s'étendant de préférence selon l'axe longitudinal médian de celle-ci et de forme générale rectangulaire ; la patte 24 comprend une languette 22 avantageusement parallèle à la semelle 21 à laquelle elle est raccordée par un talon 23 qui lui est globalement perpendiculaire ; la hauteur du talon 23 est de l'ordre de grandeur de la valeur du diamètre du fil 6 à fixer à laquelle il convient d'ajouter l'épaisseur de l'aile plane 12 du profilé 11 de fixation.

La languette 22 s'étend juste au dessus de la découpe 25 qu'elle surplombe.

Pour assurer une rigidité convenable du dispositif de fixation 20 lorsqu'il est en tôle mince, la semelle 21 est prolongée selon deux retours 26, 27 s'étendant le long de ses bords longitudinaux et dirigés du côté opposé à celui où se trouve la patte 24 ; avantageusement, les retours 26, 27 s'étendent perpendiculairement par rapport à la semelle 21.

Le bord transversal de la découpe 25, qui fait face au talon 23 de la patte 24, est, par découpage et pliage, conformé en griffe 28 inclinée, par rapport à la semelle 21, du même côté que celui où se trouve la patte 24.

Le bord transversal, proche du talon 23, de la semelle 21 est, par découpage et pliage, également conformé en griffe 29 inclinée du même côté que celui de la griffe 28 ; ainsi, les griffes 28 et 29 sont disposées de part et d'autre du talon 23 de la patte 24 et encadrent en quelque sorte la languette 22 longitudinalement.

La mise en oeuvre du dispositif de fixation 20 selon l'invention découle de la description qui précède.

Sur la figure 1, on voit que le dispositif de fixation 20 est présenté en sorte que la face supérieure de la semelle 21 coopère avec la face inférieure de l'aile plane 12 du profilé 11, la languette 22 et son talon ayant traversé l'ouverture 13 allongée du profilé 11.

Ici, le dispositif de fixation 20 ne comporte pas de griffes 28 ou 29, la semelle 21 étant directement en contact avec le profilé 11.

Le dispositif de fixation 20 placé sur la partie droite de la figure 22 est représenté juste avant l'opération de fixation proprement dite ; celui qui est placé sur la partie gauche de la figure 22 est opérationnel, la languette 22 ayant été rabattue autour du fil longitudinal 6 vers la surface du profilé 11 à l'aide d'un tournevis ou mieux de l'outil 100 de la figure 6.

La figure 4 montre en perspective le chemin de câbles 5 ainsi fixé sur le profilé 11.

La figure 5 montre le dispositif de fixation 20 de la figure 2, muni des griffes 28 et 29, dans sa position opérationnelle : les griffes 28, 29 assurent, par coopération avec la face inférieure de l'aile plane 12 du profilé 11, une meilleure immobilisation du dispositif de fixation 20 par rapport au profilé 11, dans le sens longitudinal de celui-ci, la griffe 28 pouvant avantageusement venir contre le bord de l'ouverture 13 à l'intérieur de celle-ci.

Selon une variante non représentée, la griffe 28 vient à l'intérieur, non pas de l'ouverture 13, mais d'une ouverture additionelle également réalisée dans l'aile plane 12 du profilé 11.

Selon la variante de la figure 3, la griffe 28 est remplacée par une griffe 58 plus large qui est destinée à coopérer avec la face inférieure de l'aile plane 12 du profilé 11 à la manière de la griffe 29.

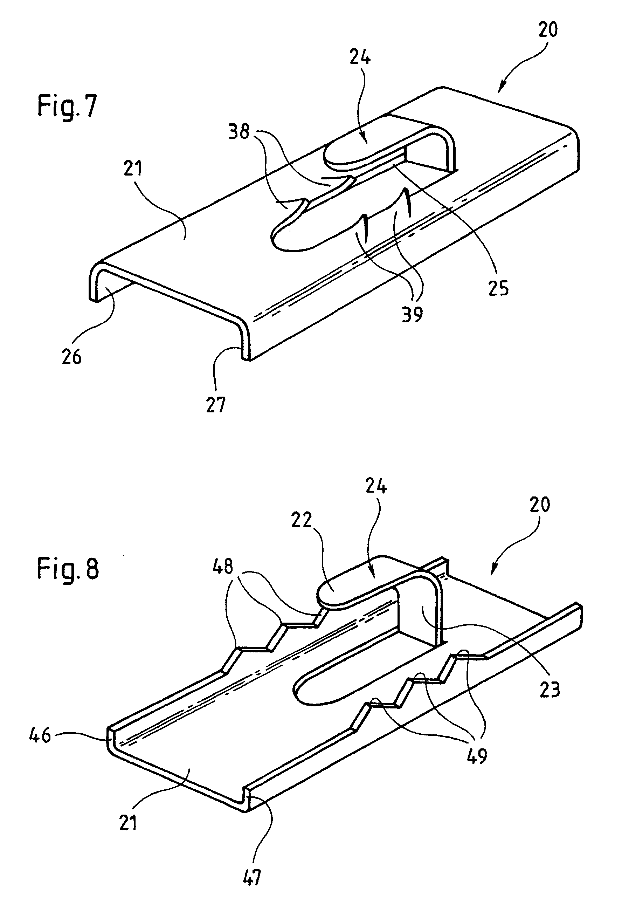

Selon la variante de la figure 7, le dispositif de fixation 20 porte également des griffes 38, 39 mais celles-ci sont obtenues en conformant par découpe et pliage les bords longitudinaux de la découpe 25.

La figure 8 montre une variante de dispositif de fixation 20 dans laquelle les retours de raidissement 46, 47 sont dirigés, par rapport à la semelle 21, du même côté que celui où s'étend la patte 24 ; cette disposition est mise à profit pour créer des griffes 48, 49 en forme de dents par simple découpe desdits retours 46, 47 ; ces griffes 48, 49 sont avantageusement ménagées au droit de la patte 24 ; bien entendu, ici la hauteur du talon 23 tient non seulement compte du diamètre du fil 6 à fixer et de l'épaisseur de l'aile plane 12 du profilé 11 mais également de la hauteur des griffes 48, 49 par rapport à la semelle 21.

Il est à noter que le dispositif de fixation 20 selon l'invention permet grâce à la forme allongée des ouvertures 13 sur le profilé de fixation 12 de tenir compte de tolérances de fabrication car il peut être déplacé longitudinalement par rapport au profilé avant l'opération de fixation proprement dite, c'est-à-dire avant rabattement de sa languette 22.

Il permet aussi de ce fait l'utilisation de chemins de câbles 5 dont l'écartement des fils longitudinaux 6 n'est pas tout à fait le même avec les mêmes profilés de fixation 11 à ouvertures, la variation d'écartement permise étant définie par la longueur des ouvertures 13 allongées des profilés et de l'ordre de quelques millimètres.

De même, il est possible en déplaçant longitudinalement le dispositif de fixation 20 par rapport au profilé 11 de compenser un mauvais alignement du support 10 au droit des profilés 11 tout en conservant l'alignement du chemin de câbles.

## Revendications

1. Dispositif de fixation, utilisable pour la fixation d'un fil (6) sur un élément porteur (11) ayant une aile plane (12) munie d'au moins une ouverture (13), **caractérisé par le fait qu'**il est en tôle et comporte une semelle (21) globalement plane d'où émerge une patte (24) adaptée à traverser ladite ouverture (13) et à s'engager sur le fil (6).

2. Dispositif de fixation selon la revendication 1, **caractérisé par le fait que** la patte (24) comprend une languette (22) parallèle à la semelle (21) à laquelle elle est raccordée par un talon (23), la languette (22) étant à une distance de la semelle (21) égale globalement à la valeur du diamètre du fil (6) à fixer à laquelle il convient d'ajouter l'épaisseur de l'aile plane (12) de l'élément porteur (11).

3. Dispositif de fixation selon l'une des revendications 1 ou 2, **caractérisé par le fait que** la patte (24) est formée par la matière issue d'une découpe (25) ménagée dans la semelle (21).

4. Dispositif de fixation selon la revendication 3, **caractérisé par le fait que** la découpe (25) est de forme générale rectangulaire.

5. Dispositif de fixation selon l'une des revendications 3 ou 4, prises en combinaison avec la revendication 2, **caractérisé par le fait que** la languette (22) s'étend juste au dessus de la découpe (25) qu'elle surplombe.

6. Dispositif de fixation selon l'une des revendications 3 à 5, prises en combinaison avec la revendication 2, **caractérisé par le fait que** le bord de la découpe (25) faisant face au talon (23) de la patte (24) et le bord, proche du talon (23), de la semelle (21) sont conformés en griffes (28,29,58) inclinées du même côté que la patte (24).

7. Dispositif de fixation selon l'une des revendications 3 à 5, prises conjointement avec la revendication 2, **caractérisé par le fait que** deux bords de la découpe (25) se faisant face portent des griffes (38,39) inclinées du même côté que la patte (24).

8. Dispositif de fixation selon l'une des revendications 1 à 7, **caractérisé par le fait que** la semelle (21) est prolongée selon deux retours (26,27) dirigés, par rapport à la semelle (21), du côté opposé à celui où se trouve la patte (24).

9. Dispositif de fixation selon l'une des revendications 1 à 5, **caractérisé par le fait que** la semelle (21) est prolongée selon deux retours (46,47) dirigés, par rapport à la semelle (21), du même côté que celui où s'étend la patte (24).

10. Dispositif de fixation selon la revendication 9, **caractérisé par le fait que** lesdits retours (46,47) sont munis de griffes (48,49).

11. Dispositif de fixation selon l'une des revendications 1 à 10, **caractérisé par le fait qu'**il est destiné à la fixation d'une structure en treillis conformée en chemin de câbles (5).

12. Ensemble porteur pour chemin de câbles (5) en treillis de fils, constitué par l'association d'un élément porteur (11) ayant au moins une ouverture (13) allongée sur une aile plane et d'au moins un dispositif de fixation (20) selon la revendication 11.

13. Ensemble porteur selon la revendication 12, **caractérisé par le fait que** l'élément porteur (11) comporte au moins deux ouvertures (13) et le nombre de dispositifs de fixation (20) associés est au moins égal à deux, les ouvertures (13) étant disposées sur l'aile (12) de l'élément porteur (13) de manière à coopérer avec des fils longitudinaux (6) différents du chemin de câbles (5).

## Patentansprüche

1. Befestigungsvorrichtung, verwendbar zur Befestigung eines Drahts (6) an einem Trägerelement (11) mit einem ebenen Flügel (12), der mit mindestens einer Öffnung (13) versehen ist, **dadurch gekennzeichnet, daß** sie aus Blech ist und eine insgesamt ebene Grundplatte (21) aufweist, aus der eine Lasche (24) vorsteht, die die Öffnung (13) durchqueren und sich auf den Draht (6) aufschieben kann.

2. Befestigungsvorrichtung nach Anspruch 1, **dadurch gekennzeichnet, daß** die Lasche (24) eine Zunge (22) parallel zur Grundplatte (21) aufweist, an die sie über einen Fuß (23) angeschlossen ist, wobei die Zunge (22) einen Abstand zur Grundplatte (21) aufweist, der global gleich dem Wert des Durchmessers des zu befestigenden Drahts (6) zuzüglich der Stärke des ebenen Flügels (12) des Trägerelements (11) ist.

3. Befestigungsvorrichtung nach einem der Ansprüche 1 oder 2, **dadurch gekennzeichnet, daß** die Lasche (24) aus dem Material geformt wird, das von einem Ausschnitt (25) in der Grundplatte (21) stammt.

4. Befestigungsvorrichtung nach Anspruch 3, **dadurch gekennzeichnet, daß** der Ausschnitt (25) eine allgemein rechteckige Form hat.

5. Befestigungsvorrichtung nach einem der Ansprüche 3 oder 4 in Kombination mit Anspruch 2, **dadurch gekennzeichnet, daß** die Zunge (22) sich genau über dem Ausschnitt (25) erstreckt, den sie überdeckt.

6. Befestigungsvorrichtung nach einem der Ansprüche 3 bis 5 in Kombination mit Anspruch 2, **dadurch gekennzeichnet, daß** der Rand des Ausschnitts (25), der dem Fuß (23) der Lasche (24) gegenüberliegt, und der Rand der Grundplatte (21) nahe dem Fuß (23) als Klauen (28, 29, 58) ausgebildet sind, die zur gleichen Seite geneigt sind wie die Lasche (24).

7. Befestigungsvorrichtung nach einem der Ansprüche 3 bis 5 in Kombination mit Anspruch 2, **dadurch gekennzeichnet, daß** zwei einander gegenüberliegende Ränder des Ausschnitts (25) Klauen (38, 39) aufweisen, die zur gleichen Seite geneigt sind wie die Lasche (24).

8. Befestigungsvorrichtung nach einem der Ansprüche 1 bis 7, **dadurch gekennzeichnet, daß** die Grundplatte (21) durch zwei Umschläge (26, 27) verlängert wird, die in bezug auf die Grundplatte (21) zu der die Lasche (24) tragenden Seite entgegengesetzt ausgerichtet sind.

9. Befestigungsvorrichtung nach einem der Ansprüche 1 bis 5, **dadurch gekennzeichnet, daß** die Grundplatte (21) durch zwei Umschläge (46, 47) verlängert wird, die in bezug auf die Grundplatte (21) zur gleichen Seite ausgerichtet sind wie die Lasche (24).

10. Befestigungsvorrichtung nach Anspruch 9, **dadurch gekennzeichnet, daß** die Umschläge (46, 47) mit Klauen (48, 49) versehen sind.

11. Befestigungsvorrichtung nach einem der Ansprüche 1 bis 10, **dadurch gekennzeichnet, daß** sie zur Befestigung einer als Kabelwanne (5) ausgebildeten Gitterstruktur dienen soll.

12. Trägereinheit für eine Kabelwanne (5) aus Drahtgeflecht, die aus der Kombination eines Trägerelements (11), das mindestens eine längliche Öffnung (13) auf einem ebenen Flügel aufweist, und mindestens einer Befestigungsvorrichtung (20) nach Anspruch 11 besteht.

13. Trägereinheit nach Anspruch 12, **dadurch gekennzeichnet, daß** das Trägerelement (11) mindestens zwei Öffnungen (13) aufweist, und die Anzahl der zugeordneten Befestigungsvorrichtungen (20) mindestens zwei beträgt, wobei die Öffnungen (13) auf dem Flügel (12) des Trägerelements (11) so angeordnet sind, daß sie mit verschiedenen Längsdrähten (6) der Kabelwanne (5) zusammenwirken.

## Claims

1. A fixing device which can be used to fix a wire (6) to a support member (11) having a plane flange (12) in which there is at least one opening (13), **characterized in that** it is made of sheetmetal and includes a globally plane baseplate (21) from which emerges a lug (24) adapted to be passed through said opening (13) and to engage over the wire (6).

2. A fixing device according to claim 1, **characterized in that** the lug (24) includes a tongue (22) parallel to the baseplate (21) to which it is joined by a heelpiece (23) and the tongue (22) is at a distance from the baseplate (21) globally equal to the diameter of the wire (6) to be fixed plus the thickness of the plane flange (12) of the support member (11).

3. A fixing device according to either claim 1 or claim 2, **characterized in that** the lug (24) is formed by the material originally occupying the cut-out (25) in the baseplate (21).

4. A fixing device according to claim 3, **characterized in that** the cut-out (25) is generally rectangular.

5. A fixing device according to either claim 3 or claim 4 in conjunction with claim 2, **characterized in that** the tongue (22) is just above the cut-out (25) that it overlies.

6. A fixing device according to any of claims 3 to 5 in conjunction with claim 2, **characterized in that** the edge of the cut-out (25) facing the heelpiece (23) of the lug (24) and the edge of the baseplate (21) near the heelpiece (23) are formed into inclined claws (28, 29, 58) on the same side as the lug (24).

7. A fixing device according to any of claims 3 to 5 in conjunction with claim 2, **characterized in that** two facing edges of the cut-out (25) carry inclined claws (38, 39) on the same side as the lug (24).

8. A fixing device according to any of claims 1 to 7, **characterized in that** the baseplate (21) has two rims (26, 27) on the opposite side of the baseplate (21) to the lug (24).

9. A fixing device according to any of claims 1 to 5, **characterized in that** the baseplate (21) has two rims (46, 47) on the same side of the baseplate (21) as the lug (24).

10. A fixing device according to claim 9, **characterized in that** said rims (46, 47) are provided with claws (48, 49).

11. A fixing device according to any of claims 1 to 10, **characterized in that** it is designed for fixing a mesh structure in the form of a cable duct (5).

12. A support system for a wire mesh cable duct (5) consisting of the combination of at least one fixing device (20) according to claim 11 and a support member (11) in which there is at least one elongate opening (13) in a plane flange.

13. A support system according to claim 12, **characterized in that** the support member (11) has at least two openings (13) in it, there are at least two associated fixing devices (20), and the openings (13) are disposed in the flange (12) of the support member (13) to cooperate with different longitudinal wires (6) of the cable duct (5).
